# FASCICULE DE BREVET EUROPEEN

(11) **EP 0 705 987 B1**
(45) Date de publication et mention de la délivrance du brevet: **14.08.2002**
(21) Numéro de dépôt: 95440063.6
(22) Date de dépôt: 04.10.1995
(51) Int. Cl.: F16B 25/00, F16B 35/06

(54) **Vis à tête fraisée auto-foreuse**
Selbstschneidende gebohrte Kopfschraube
Self-cutting drilled screw head

(30) Priorité: 04.10.1994 FR 9411980
(43) Date de publication de la demande: 10.04.1996
(73) Titulaire: VYNEX S.A., 08160 Balaives (FR)
(72) Inventeur: Fargant Jean-Paul, 08200 Floing (FR); Gabet Christian, 08330 Vrigne aux Bois (FR)
(74) Mandataire: Rhein, Alain

(56) Documents cités:
- BE-A- 530 258
- CH-A- 106 594
- DE-U- 9 302 186
- US-A- 5 199 839

## Description

La présente invention a pour objet une vis à tête fraisée auto-foreuse, à enfouissement total dans la pièce à visser.

Il existe à ce jour de nombreuses variétés de vis, dont la plus commune est la vis à bois ou à aggloméré à tête fraisée.

Généralement, la mise en place d'une telle vis nécessite, selon la dureté du matériau, de percer un avant-trou et de le chanfreiner afin de permettre l'enfouissement de la tête de la vis.

Du fait de la généralisation de l'usage des outillages électriques portatifs de vissage les vis doivent présenter certaines caractéristiques, comme par exemple une empreinte creuse de type pozidriv, pour permettre de centrer l'embout de vissage et empêcher son échappement, ainsi qu'une pointe plus effilée facilitant l'amorce du vissage.

Lors du vissage dans un matériau tendre, par exemple du bois de pin ou de sapin ou certains agglomérés, un chanfreinage préalable n'est pas nécessaire, la pression exercée suffisant à écraser le matériau afin d'y loger la tête de la vis.

Le document US-A-5 199 839 décrit une vis selon la préambule de la revendication 1 dont la tête trompette comporte à sa face inférieure concave des nervures inclinées dans le sens du filet de sa partie filetée et présentant un bord coupant qui participe, lors du vissage, à la création du chanfrein.

La vis à bois décrite dans ce document est principalement destinée à l'assemblage de planches de bois pour la réalisation de planchers d'extérieur, et les nervures qu'elle comporte ont pour fonction essentielle de réaliser un blocage de la vis empêchant son desserrage progressif dans le temps : pour cette raison les nervures en question sont largement saillantes, ce qui nécessite l'application d'un fort couple de vissage pour la mise en place de ladite vis, alors que les outils électriques de vissage ne sont pas tous de forte puissance.

D'autre part, lors du vissage dans un matériau relativement dur au moyen d'un outil électrique non pourvu d'un limiteur de couple, il arrive que la vis se bloque et que sa tête se rompe.

La présente invention vise à remédier à ces divers inconvénients en proposant une vis à tête fraisée auto-foreuse, à enfouissement total dans la pièce à visser, dont la mise en place nécessite l'application d'un couple moins important qu'une vis de mêmes dimensions de type connu et ne nécessite pas de perçage et de chanfreinage préalables, autorisant ainsi un gain de temps de pose non négligeable, comme définié dans la partie caractérisante de la revendication 1.

Les nervures disposées sur la tête de la vis permettent d'enlever de la matière et de réaliser partiellement le chanfrein lors du vissage, tandis que les stries longitudinales de sa partie filetée permettent de diminuer la surface de frottement, en augmentant ainsi le couple de vissage.

Dans un mode de réalisation particulier de la vis selon l'invention, une partie tronconique moins évasée que la tête est intercalée entre cette dernière et la partie filetée, en vue de renforcer la liaison et de diminuer les risques de rupture.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en plan d'une vis selon l'invention.
- la figure 2 représente une vue en coupe de la même vis selon la ligne XX' de la figure 1.
- la figure 3 représente une vue en coupe de la même vis selon la ligne YY' de la figure 1.

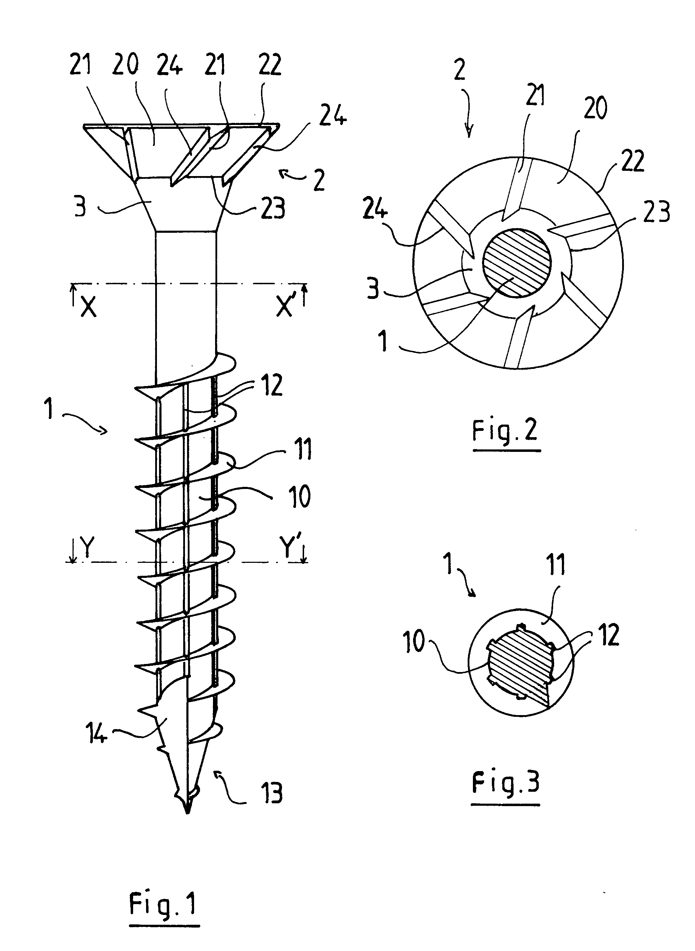

Si on se réfère à la figure 1 on peut voir qu'une vis selon l'invention comporte une partie filetée 1 et une tête fraisée 2, reliées entre elles par une partie intermédiaire tronconique 3.

La partie intermédiaire tronconique 3 renforce la liaison et diminue les risques de rupture, et permet en outre de réaliser une empreinte plus profonde, non visible sur la figure, assurant ainsi une meilleure répartition de l'effort de vissage sur l'embout de l'outil de vissage.

Si on se réfère également à la figure 2, on peut voir que la tête 2 comporte sur sa face tronconique 20 des nervures 21 régulièrement réparties, s'étendant entre le bord supérieur 22 et la base 23 de la tête 2, et légèrement inclinées dans le sens du filet 11 de la partie filetée 1, c'est-à-dire dans le sens du vissage.

Les nervures 21 sont de section sensiblement triangulaire, leur face 24 qui entre en contact avec la pièce à visser étant sensiblement perpendiculaire à la face tronconique 20, de manière à enlever de la matière lors du vissage et à créer un chanfrein.

Si on se réfère également à la figure 3 on peut voir que le corps 10 de la partie filetée 1 comporte longitudinalement, à la base du filet 11, des stries 12 en relief.

Les stries 12 permettent de réduire la surface de frottement du corps 10 contre la pièce à visser lors du vissage et donc d'augmenter le couple de vissage.

On peut également voir sur la figure 1 que la pointe 13 de la partie filetée 1 est très effilée, formant un angle au sommet compris entre 25 et 30°, afin de permettre, outre une meilleure pénétration, d'amorcer le vissage avec précision.

La pointe 13 comporte en outre une entaille coupante 14 permettant d'enlever et d'évacuer de la matière, évitant ainsi de fendre ou d'éclater celle-ci, sans nécessiter de réaliser un avant-trou.

## Revendications

1. Vis à tête fraisée auto-foreuse, à enfouissement total dans la pièce à visser, comprenant une partie filetée (1) et une tête (2) comportant des nervures (21) régulièrement réparties sur sa surface tronconique (20) et légèrement inclinées dans le sens du filet (11) de la partie filetée (1), lesdites nervures (21) s'étendent chacune entre le bord supérieur (22) et la base (23) de ladite tête (2) et présentent une section transversale sensiblement triangulaire, leur face (24) qui entre en contact avec la pièce à visser étant sensiblement perpendiculaire à ladite surface tronconique (20) ; et **caractérisée en ce que** le corps (10) de la partie filetée (1) comporte à la base du filet (11) des stries longitudinales parallèles en saillie (12) s'étendant de l'éxtrémité d'une partie de ledit corps adjacent une pointe (13) de la partie filétée jusqu'à la fin du filet (11).

2. Vis selon la revendication 1 **caractérisée en ce qu'**elle comporte une partie tronconique (3) moins évasée que la tête (2), intercalée entre cette dernière et la partie filetée (1).

3. Vis selon la revendication 1 ou la revendication 2 **caractérisée en ce que** la pointe (13) de la partie filetée (1) est très effilée, formant un angle au sommet compris éntre 25 et 30°.

4. Vis selon l'une quelconque des revendications précédentes **caractérisée en ce que** la pointe (13) de la partie filetée (1) comporte une entaille latérale coupante (14).

## Patentansprüche

1. Völlig in den zu verschraubenden Teil eindringende, selbstbohrende Versenkschraube, umfassend einen Gewindeteil (1) und einen Kopf (2), der gleichförmig über seine kegelstumpfförmige Oberfläche (20) verteilte und geringfügig in Richtung auf das Gewinde (11) des Gewindeteils (1) geneigte Rippen (21) umfaßt, wobei sich die genannten Rippen (21) jeweils zwischen dem oberen Rand (22) und der Base des genannten Kopfes (2) erstrecken und einen im wesentlichen dreieckigen Querschnitt aufweisen, wobei ihre mit dem zu verschraubenden Teil in Berührung kommende Fläche (24) im wesentlich senkrecht zur genannten kegelstumpfförmigen Oberfläche (20) ist ; und **dadurch gekennzeichnet, daß** der Körper (10) des Gewindeteils an der Base des Gewindes (11) hervorstehende, parallelle Längsrippen (12) umfaßt, die sich vom Ende eines Teils des genannten Körpers, der sich neben einer Spitze (13) des Gewindeteils befindet, bis zum Ende des Gewindeteils (11) erstrecken.

2. Schraube nach Anspruch 1, **dadurch gekennzeichnet, daß** sie einen kegelstumpfförmigen Teil (3) umfaßt, der weniger erweitert ist als der Kopf (2) und sich zwischen diesem letzten und dem Gewindeteil (1) befindet.

3. Schraube nach Anspruch 1 oder Anspruch 2, **dadurch gekennzeichnet, daß** die Spitze (13) des Gewindeteils (1) sehr spitzförmig ist, wobei sie oben einen Winkel von 25 bis 30° bildet.

4. Schraube nach irgendeinem der vorgehenden Ansprüche, **dadurch gekennzeichnet, daß** die Spitze (13) des Gewindeteils (1) einen scharfen Seitenausschnitt umfaßt (14).

## Claims

1. Self-boring countersunk screw completely inserting into the part to be screwed, including a threaded portion (1) and a head (2) including ribs (21) uniformly distributed over its truncated conical surface (20) and slightly inclined in the direction of the thread (11) of the threaded portion (1), said ribs (21) each extending between the upper edge (22) and the base of said head (2) and having a substantially triangular cross-section, their face (24) entering into contact with the part to be screwed being substantially perpendicular to said truncated conical surface (20); and **characterised in that** the body (10) of the threaded portion (1) includes, at the base of the thread (11), longitudinal protruding parallel ribs (12) extending from the end of a portion of said body adjacent to a tip (13) of the threaded portion to the end of the thread (11).

2. Screw according to claim 1, **characterised in that** it includes a tapered portion (3), that is less widened than the head (2), intercalated between this latter and the threaded portion (1).

3. Screw according to claim 1 or claim 2, **characterised in that** the tip (13) of the threaded portion (1) is strongly tapered, forming an angle at the top between 25 and 30°.

4. Screw according to any of the preceding claims, **characterised in that** the tip (13) of the threaded portion (1) includes a sharp side cut-out (14).
